# EUROPÄISCHE PATENTSCHRIFT

(11) **EP 1 006 925 B1**
(45) Veröffentlichungstag und Bekanntmachung des Hinweises auf die Patenterteilung: **16.06.2004**
(21) Anmeldenummer: 97911409.7
(22) Anmeldetag: 26.11.1997
(51) Int. Cl.: A61C 5/12

(54) **KOFFERDAM**
RUBBER DAM
DIGUE

(30) Priorität: 10.02.1997 DE 19704904; 28.05.1997 DE 19722218; 04.08.1997 DE 19733712
(43) Veröffentlichungstag der Anmeldung: 14.06.2000
(73) Patentinhaber: Horvath, Domonkos, Dr., 79798 Jestetten (DE)
(72) Erfinder: HORVATH, Domonkos, D-79798 Jestetten (DE); LUTZ, Felix, CH-8706 Meilen (CH)
(74) Vertreter: Blum, Rudolf Emil Ernst
(86) Internationale Anmeldenummer: PCT/IB1997/001480
(87) Internationale Veröffentlichungsnummer: WO 1998/034559

(56) Entgegenhaltungen:
- US-A- 5 011 409
- US-A- 5 078 604
- US-A- 5 499 917

## Beschreibung

Diese Anmeldung beansprucht die Priorität der deutschen Patentanmeldungen 197 04 904.4, 197 22 218.8 und 197 33 712.0, die am 7.2.97, 27.5.97 und 1.8.97 eingereicht wurden.

### Technisches Gebiet

Die Erfindung betrifft einen Kofferdam gemass Oberbegriff der unabhängigen Anspruche.

In der Zahnheilkunde ist ein Kofferdam ein Hilfsmittel bei zahnarztlichen Behandlungen, das die Isolierung und dadurch Trockenlegung der zu behandelnden Zähne erlaubt. Durch die Isolierung wird auch die Infektionsgefahr im Bereich des behandelten Zahnes verringert. Synonyme Bezeichnungen sind Rubberdam, Spanngummi, Gummilappen, Gummiplatte, Gummituch, etc.

### Stand der Technik

Seit dem Jahre 1864 ist es bekannt, ein Gummituch zu lochen und über den Zahn zu ziehen, so dass der Rand des Loches im Gummituch am harten Zahn anliegt und das Gummituch die Mundschleimhaut abdeckt, während der obere Teil des Zahnes behandelbar ist. Zur besseren Befestigung der Gummifolie an den Zähnen wurden verschiedenartigste Mittel vorgeschlagen. Am weitesten verbreitet sind jedoch Klammern aus Metall, die das Gummituch am Zahn fixieren.

In US 5 078 604 wird ein Kofferdam beschrieben, der aus einer rechteckigen Folie besteht. Diese Folie ist im wesentlichen flach und besitzt lediglich vorgeformte Erhebungen zur Aufnahme der Zahnreihen. Im Gebrauch wird sie U-förmig gebogen, so dass sie in den Mund eingeführt werden kann, was allerdings den Nachteil hat, dass der Operationsraum lateral zu den Wangen hin nicht abgeschlossen ist. Das gleiche gilt für die in US 3 772 790 gezeigte Vorrichtung.

US 174 942 zeigt einen Kofferdam, der in einem Bereich Beutelförmig ausgestaltet ist. Dies vereinfacht das Einbringen des Kofferdams in den Mundraum.

Obwohl der Kofferdam für moderne Zahnbehandlungsverfahren von grösster Bedeutung sein könnte, wird er von Zahnärzten nur selten eingesetzt.

### Darstellung der Erfindung

Der Erfindung liegt daher die Aufgabe zugrunde, einen gattungsgemässen Kofferdam bzw. das Verfahren so weiterzuentwickeln, welcher bzw. welches den gewachsenen Anforderungen der zahnärztlichen Praxis besser gerecht wird.

Diese Aufgabe wird in einem Aspekt der Erfindung vom Kofferdam gemäss Anspruch 1 gelöst. Das Abdeckmittel besitzt also im wesentlichen Beutelform, d.h. es ist sackähnlich vorgeformt. Im Gegensatz zu bekannten Ausführungen, bei denen das Abdeckmittel durch eine plane Folie gebildet wird, kann der erfindungsgemässe Kofferdam ohne starke Deformation in die Mundhöhle eingelegt werden. Dadurch vereinfacht sich die Applikation und es sind geringere Haltekräfte zur Fixierung notwendig.

Weiter ist ein Haltemittel vorgesehen, mit dem das Abdeckmittel gegen die Mundhöhle gedrückt werden kann. Dadurch verbessert sich die Abdichtung und es treten in einem allfälligen Adhäsivbereich noch kleinere Kräfte auf. Zusätzlich ist ein perioraler Kofferdamrahmen vorgesehen. Durch das Haltemittel im Innern und den Kofferdam aussen können die Lippen offen gehalten werden.

Zur Abdichtung des Kofferdams gegen Zahnhartsubstanz, Weichgewebe oder Befestigungseinrichtungen kann dieser mit Adhäsivbereichen versehen werden.

Da die Fixierung des Kofferdams nur kleine Haltekräfte erfordert, wird die Befestigung vereinfacht und konventionelle Befestigungsklemmen, die die Zähne beschädigen können, werden nicht benötigt. Dafür wird es möglich, im Arbeitsbereich nicht nur die Zähne sondern auch das Zahnfleisch offenzulegen, so dass dem Zahnarzt Zahnhals und angrenzende Gingiva für die Behandluhg zugänglich sind. Dem kommt eine zentrale Bedeutung bei der modernen zahnärztlichen Behandlung zu.

Vorzugsweise umfasst der Kofferdam eine Befestigungseinrichtung, wobei die Befestigungseinrichtung ein mit dem Abdeckmittel verbundenes, relativ zum Abdeckmittel festes Haltemittel aufweist, das in der Mundhöhle beidseitig der Zahnreihe an das Zahnfleisch anlegbar ist, um Zahn und Zahnfleisch gemeinsam zu isolieren.

Dieser Ausführung der Erfindung liegt die Erkenntnis zugrunde, dass der bekannte am Zahn befestigte Kofferdam mit dem Abdeckmittel zwangsläufig einen unteren Bereich der Zahne abdeckt und somit das trockengelegte Arbeitsfeld sehr einschränkt. Behandlungsmassnahmen im Bereich des Zahnfleischrandes sind kaum oder nur durch Traumatisierung des marginalen Sulcus durchführbar. Massnahmen bei denen das Zahnfleisch beteiligt ist, sind mit dem bekannten Kofferdam überhaupt nicht durchführbar. Der erfindungsgemässe Kofferdam erlaubt es hingegen, Zahnhals und angrenzendes Zahnfleischs als untrennbare Behandlungseinheit für den Zahnarzt zu erhalten und eine dento-gingivale Einheit von der Mundhöhle zu isolieren.

Die Befestigungseinrichtung legt das Abdeckmittel auf beiden Seiten der Zahnreihe an das Zahnfleisch an und lässt somit im Zahnbereich genügend Raum, um eine Öffnung auszuschneiden, die sowohl den Zahn oder die zu behandelnden Zähne, als auch das diese umgebende Zahnfleisch freilegt. Am zu behandelnden Kieferbereich wird somit Restaurationsrand und marginale Gingiva als Behandlungseinheit freigelegt, wobei sich um diese Behandlungseinheit das festere Haltemittel erstreckt, um das Abdeckmittel an das Zahnfleisch anzulegen.

Vorteilhaft ist es, wenn im Bereich des Haltemittels ein Klebebereich bzw. Adhäsivbereich angeordnet ist. Sofern nur eine Abhaltefunktion verlangt wird, kann auf diesen Klebebereich verzichtet werden. Um jedoch einen guten Infektions- und Feuchtigkeitsschutz zu erzielen, wird eine reversible Klebezone vorgeschlagen, um das Abdeckmittel im Bereich der feuchten Mundhöhle zu befestigen. Als Klebstoffe, die sich an leicht befeuchteter Schleimhaut bewährt haben, eignen sich z.B.: Pektin, Gelatine, Natriumcarboxylcellulose und Polyisobutylen, Calcium-Natriumalginat, Hydrokolloid-Verbände, Polyvinylacetat und Carboxylmethylcellulose etc. Der Klebebereich liegt vorzugsweise zumindest auch auf dem Haltemittel, oder auf der dem Haltemittel gegenüberliegenden Seite des Abdeckmittels, je nachdem auf welcher Seite des Abdeckmittels das Haltemittel angeordnet ist.

Besonders günstig ist es, wenn als Klebebereich der Bereich des Abdeckmittels verwendet wird, der zwischen den beidseitig der Zahnreihe angeordneten Haltemittelelementen liegt. Dieser Bereich kann völlig drucklos an das Zahnfleisch angelegt werden, und die Flexibilität des Abdeckmittels erlaubt eine einfache Adaption an Unebenheiten im Zahnfleischbereich.

Um das Haltemittel optimal an die individuelle Anatomie anzupassen, wird vorgeschlagen, dass das Haltemittel plastisch verformbar ist. Die Festigkeit wird dann so gewählt, dass ohne Druck auf das Zahnfleisch eine Anpassung an die individuelle Zahnfleischform gewährleistet werden kann.

Das Haltemittel kann jedoch auch elastisch ausgebildet sein. Eine anatomisch angepasste Form des Haltemittels wird dabei aus elastischem Material hergestellt, um vielseitig verwendbar zu sein und durch die Elastizität des Materials einen leichten Druck auf das Zahnfleisch auszuüben ohne umgebendes Gewebe zu verletzen.

Darüber hinaus kann das Haltemittel plastische und elastische Bereiche gleichzeitig aufweisen, um beispielsweise parallel zur Zahnreihe, plastisch an das Zahnfleisch anlegbar zu sein und in einem Bereich quer zur Zahnreihe elastisch, um die plastischen Bereiche am Zahnfleisch zu halten.

Ein bevorzugtes Ausführungsbeispiel sieht vor, dass das Haltemittel um eine Öffnung im Abdeckmittel angeordnet ist. Dadurch entsteht ein Rahmen, der in der Praxis den behandelten Zahnbereich umgrenzt und das Abdeckmittel an das Zahnfleisch anlegt.

Da die Zahnreihen bogenförmig verlaufen, wird vorgeschlagen, dass das Haltemittel zwei ineinanderliegende, im Abstand zueinander angeordnete Bogenelemente aufweist. Dies erlaubt es, je ein Bogenelement des Haltemittels innerhalb bzw. ausserhalb der Zahnreihe an das Zahnfleisch anzulegen. U-förmige Bogenelemente erlauben das Freilegen des gesamten Ober- oder Unterkiefers.

Weiterhin wird vorgeschlagen, dass das Haltemittel zwei ineinanderliegende, im Abstand zueinander angeordnete Ringelemente aufweist. Diese Ringelemente können so in die Mundhöhle eingeschoben werden, dass jeweils zwei U-förmige Bogenelemente zur Freilegung des Oberkiefers und des Unterkiefers dienen. Hierbei ist es vorteilhaft, wenn die Ringelemente durch Knickstellen an sich gegenüberliegenden Stellen des Ringes in U-förmige Bogenelemente geteilt sind.

Beim Vorsehen von Bogen- oder Ringelementen ist es vorteilhaft, wenn zwischen den Bogenelementen bzw. den Ringelementen ein Klebebereich angeordnet ist. Dieser Klebebereich ermöglicht eine gute Abdichtung im Bereich der Öffnung im Abdeckmittel und ermöglicht eine Adaptation zwischen Haltemittel und Zahnfleisch.

Um über das Haltemittel hinaus eine Befestigung des Abdeckmittels an der Zahnreihe unter Vermeidung der bekannten, kralligen, traumatisierenden Kofferdamklammern zu ermöglichen, wird vorgeschlagen, dass die Befestigungseinrichtung anatomisch geformte, formgerechte, nicht traumatisierende, über den Zahn stülpbare, Kunststoffclips aufweist, die beliebig auf den Zahn direkt und darauf das Abdeckmittel oder umgekehrt, jeweils mit Adhäsiv abgedichtet, appliziert werden können. Diese Clips sind so weich gewählt, dass sie den Zahn nicht beschädigen und auch am Zahnfleisch anliegen können. Diese Clips können auch mit dem Haltemittel in Verbindung stehen und dieses stabilisieren.

Ferner wird vorgeschlagen, dass der erfindungsgemässe Kofferdam einen Kofferdamrahmen aufweist, der zirkulär um die Befestigungseinrichtung angeordnet ist. Ein so genannter perioraler Rahmen stabilisiert das Abdeckmittel nach aussen und verläuft vorzugsweise zirkulär um die Ober- und Unterlippe. Dieser Kofferdamrahmen ist vorzugsweise adaptierbar, damit er den behandelnden Zahnarzt und den Patienten nicht stört, z.B. indem er radial dehnbar ausgeführt ist.

In einer weiteren bevorzugten Ausführung ist in einem inzisalen/okklusalen Bereich des Abdeckmittels mindestens eine Rille angeordnet, die die Stelle markiert, an welcher der Kofferdam aufgeschnitten werden muss, um die entsprechenden Zähne freizulegen. Dadurch wird eine gezielte Öffnung des Abdeckmittels ermöglicht.

### Kurze Beschreibung der Zeichnungen

Weitere Vorteile und Anwendungen der Erfindung ergeben sich aus den abhängigen Ansrüchen und aus der nun folgenden Beschreibung anhand der Figuren. Dabei zeigen:
Fig. 1 einen Sagitalschnitt durch die Mundhöhle mit einer ersten Ausführung des erfindungsgemässen Kofferdams,
Fig. 2 einen Frontalschnitt durch die Mundhöhle mit dem Kofferdam von Fig. 1,
Fig. 3 ein vergrössertes Detail aus Fig. 2 mit einem Abdeckmittel, das im Bereich der oberen Backenzähne nicht aufgeschnitten ist,
Fig. 4 eine Ansicht des aufgeschnittenen Abdeckmittels,
Fig. 5 eine Ansicht des aufgeschnittenen Abdeckmittels in Freiendsituation
Fig. 6 einen Sagitalschnitt durch eine zweite Ausführung des Kofferdams,
Fig. 7 einen Frontalschnitt durch den Kofferdam von Fig. 6,
Fig. 8 eine dritte Ausführung eines erfindungsgemässen Kofferdams,
Fig. 9 eine vierte Ausführung eines erfindungsgemässen Kofferdams,
Fig. 10 eine fünfte Ausführung eines erfindungsgemassen Kofferdams,
Fig. 11 einen Kunststoffklip zur Verwendung mit einem erfindungsgemässen Kofferdam,
Fig. 12 eine zweite Ausführung eines Kunststoffclips,
Fig. 13 eine dritte Ausführung des Kunststoffclips,
Fig. 14 eine Alternative zur Ausführung nach Fig. 1 - 3, und
Fig. 15 die Ausführung nach Fig. 14 in aufgeschnittenem Zustand.

### Wege zur Ausführung der Erfindung

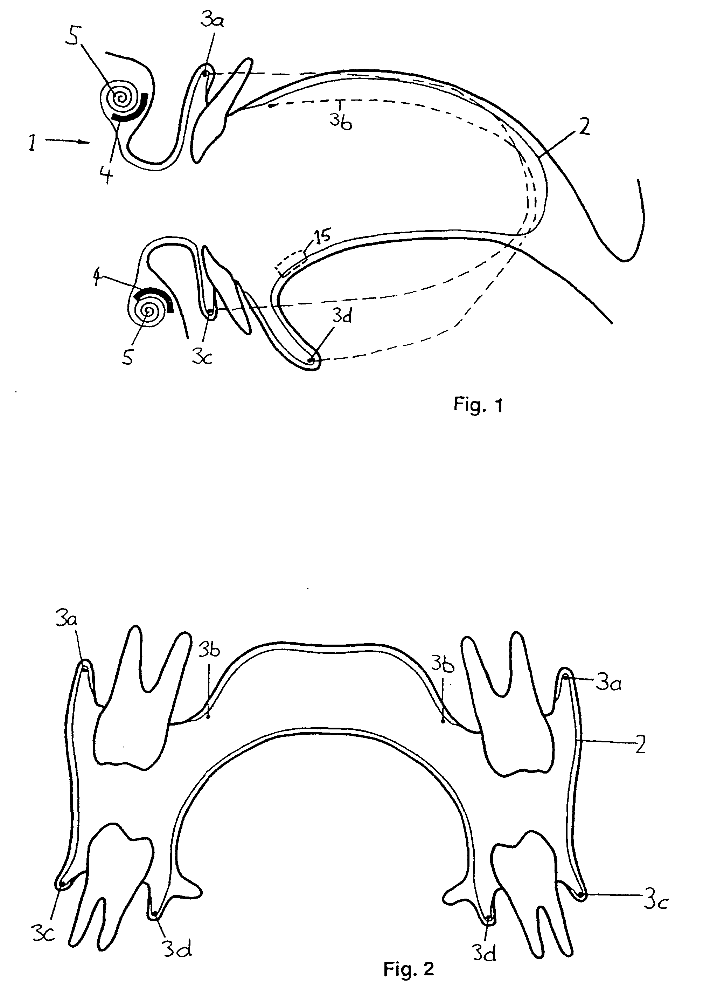

Eine erste, zur Zeit bevorzugte Ausführung des erfindungsgemässen Kofferdams 1 wird in Fig. 1 und 2 gezeigt. Er besteht aus einem Abdeckmittel 2 und einer ein Haltemittel bildenden Befestigungseinrichtung 3a - 3d. Das Abdeckmittel 2 ist eine Folie aus Rohlatex, z.B. aus cis-1,4 Polyisopren. Es kommen jedoch auch andere Materialien in Frage, z. B. PVC oder Silikon. Das Abdeckmittel ist dreidimensional vorgeformt und besitzt im wesentlichen die Form eines den Platzverhältnissen in der Mundhöhle angepassten Beutels. Ohne dass er verformt zu werden braucht, kann er tief in die Mundhöhle eingelegt werden.

In der hier gezeigten Ausführung umfasst die Befestigungsvorrichtung vier Bogenförmige Anlageelemente 3a - 3d, die entweder in das Abdeckmittel 2 eingearbeitet sind oder nach Applikation des Kofferdams in die Mundhöhle eingebracht werden. Die Anlageelemente 3a - 3d sind aus einem festeren Material als das Abdeckmittel. Die beiden Anlageelemente 3a, 3c verlaufen bukkal in den oberen bzw. unteren Umschlagfalten, die Anlageelemente 3b und 3d drücken das Abdeckmittel 2 oral gegen die Mundhöhle. Dies führt dazu, dass das Abdeckmittel 2 im Bereich zwischen den Anlageelementen 3a - 3d, d.h. im Bereich der Zähne, im wesentlichen kräftefrei anliegt.

Die Anlageelemente 3b und 3d sind bogenförmig miteinander verbunden, ebenso die Anlageelemente 3a und 3c, wie dies in Fig. 1 gestrichelt angedeutet ist, so dass sie vertikale Spannkräfte erzeugen können. Es ist auch denkbar, dass die Anlageelemente 3a und 3d bogenförmig miteinander verbunden sind, ebenso die Anlageelemente 3b und 3c, so dass der Oberkiefer-vestikuläre Bogen in den Unterkiefer-lingualen Bogen übergeht. An den zwei Punkten, wo sich die Bogenpaare kreuzen, sind sie geknickt und zueinander gelenkig fixiert.

Gegebenenfalls können die oberen Bogen mit den jeweiligen unteren Bogen lösbar verbunden sein, z.B. indem sie ineinander steckbar sind. So können die Bogen voneinander gelöst werden, so dass der Kofferdam kompakt zusammenlegbar ist.

Ausserhalb des Mundes befindet sich ein Kofferdamrahmen 4, der in frontaler Ansicht die Lippen umfasst. Er bildet eine Rinne, in welcher der äussere Rand 5 des Abdeckmittels 2 aufgerollt ist. Das aufgerollte Folienmaterial dient als Materialreserve, so dass die Tiefe des Kofferdams den jeweiligen Anforderungen angepasst werden kann. Der Kofferdamrahmen 4 besitzt einen ovalen, perioralen Verlauf. Er wird durch Überstülpung des gerollten Kofferdamrandes gehalten. Der Kofferdamrahmen ist vorzugsweise dehnbar ausgeführt, so dass ein besserer Zugang zum Kofferdam-Innenraum möglich wird. Hierzu kann er z.B. zweiteilig sein und aus zwei Halbbogen bestehen. Im Fugenbereich der Halbbogen ist im Abdeckmittel z.B. durch Zieharmonika-artige Faltung eine Materialreserve vorgesehen.

Im Unterkieferbereich des Abdeckmittels befindet sich eine Öffnung 15, die reversibel geöffnet und geschlossen werden kann. Sie dient zur Aufnahme eines Speichelziehers.

Vor der Anwendung bildet das Abdeckmittel 2 einen seitlich und endseitig geschlossenen Beutel. Vor Verwendung wird es in jenen Bereichen, die zugänglich sein sollen, aufgeschnitten. In Fig. 1 und 2 ist der Kofferdam im Bereich aller Zähne aufgeschnitten.

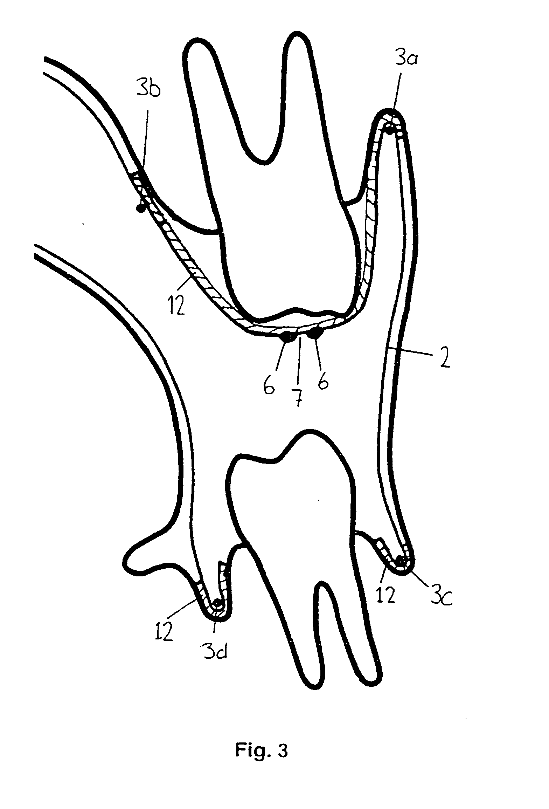

Fig. 3 zeigt ein Detail aus Fig. 2, wobei hier der Kofferdam im Bereich des oberen Backenzahns nicht aufgeschnitten worden ist. Das Abdeckmittel 2 legt sich also über den oberen Backenzahn.

Im okklusalen Bereich der Zähne verlaufen im Abdeckmittel zwei parallele Verdickungen 6, zwischen denen eine inzisale/okklusale Rille 7 gebildet wird. Diese Rille 7 markiert den Ort, an welchem das Abdeckmittel zum Freilegen der Zahne aufgeschnitten werden muss.

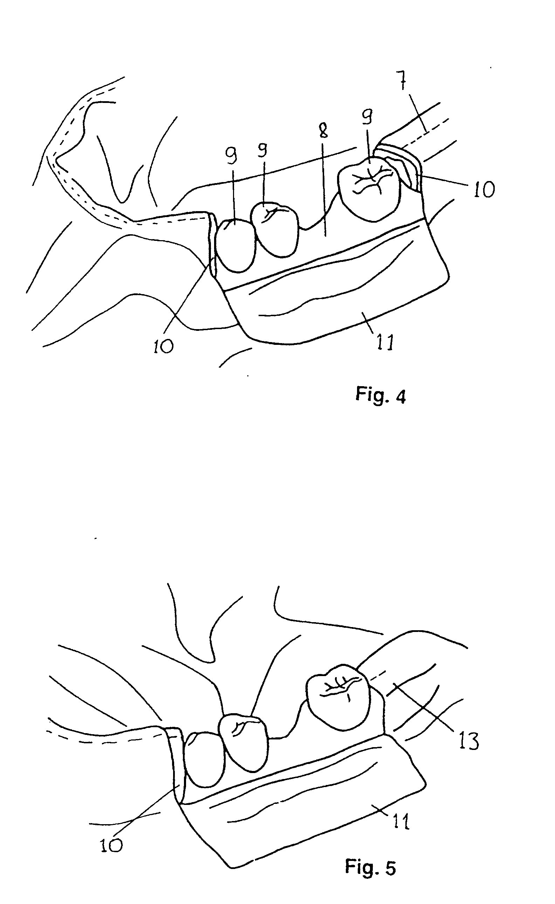

Fig. 4 zeigt eine Ansicht des aufgeschnittenen Kofferdams im Bereich einer Zahnlücke 8, wobei drei benachbarte Zähne 9 ebenfalls freigelegt wurden. Auf die zwei folgenden Zähne wurde je ein Clip 10 aufgesetzt. (Vorzugsweise werden die Clips über das Abdeckmittel auf die Zähne aufgesetzt.) Dabei handelt es sich um Kunststoffclips, die mit einem geeigneten Kitt haftend mit dem jeweiligen Zahn verbunden und lingual, okklusal und bukkal mit glatten Haftflächen ausgestaltet sind. Sie sind über eine Klebeschicht adhäsiv mit dem Abdeckmittel 2 verbunden und bilden die mesale und distale Abdichtung des Operationsgebiets. Im Operationsgebiet wurde das Abdeckmittel 2 mit T-Schnitt entlang Rille 7 und angrenzend an die Clips 10 aufgeschnitten und heruntergeklappt. Die dabei entstehenden Laschen 11 können bei Bedarf ganz abgeschnitten werden. Auf diese Weise können die klinischen Kronen zusammen mit den angrenzenden koronalen Anteilen des Alveolarkammes und, je nach Bedarf, nebst der angewachsenen Gingiva auch die frei bewegliche Schleimhaut freigelegt werden.

Die linguale und bukkale Abdichtung des Operationsbereichs wird dadurch erreicht, dass die entsprechenden Ränder des Abdeckmittels 2 mit der Gingiva verklebt werden. Hierzu ist, wie insbesondere aus Fig. 3 ersichtlich, das Abdeckmittel 2 auf seiner Aussenseite in einem Adhäsionsbereich 12 zwischen den Anlageelementen 3a und 3b bzw. 3c und 3d mit einem Kleber versehen. Vorzugsweise erstreckt sich der Adhäsionsbereich zumindest vom Anlageelement bis zur festen Gingiva, da dieser Bereich spannungsfrei ist.

Der Kleber sorgt für einen adhäsiven, reversiblen, gewebeschonenden, eventuell quellenden Verbund zwischen Gingiva und/oder Mucosa und dem Abdeckmittel, zumindest im Bereich zwischen Verlauf der vierbogigen Anlageelemente 3a - 3d und der Linea girlandiformis, bzw. dem Tuberbereich und dem zahnlosen Bereich des aufsteigenden Unterkieferastes und dem Abdeckmittel 2. Er dient auch zur Befestigung des Abdeckmittels 2 an den Clips 10 und am Kofferdamrahmen bzw. der perioralen Haut.

Anstelle der oder zusätzlich zur Klebeschicht an der Aussenseite des Abdeckmittels können auch die Clips mit Klebstoff versehen bzw. ein abdichtendes Adhäsiv im Bereich der Peripherie des Operationsfeldes aufgebracht werden.

Der Adhäsionsbereich 12 kann z. B. auch den distalen Abschluss des Operationsbereichs bilden, insbesondere falls in diesem Bereich kein Zahn zur Aufnahme eines Clips vorhanden ist. Eine entsprechende Situation ist in Fig. 5 dargestellt. Hier ist das Abdeckmittel im Endbereich 13 lingual, okklusal und bukkal mit der Gingiva verklebt.

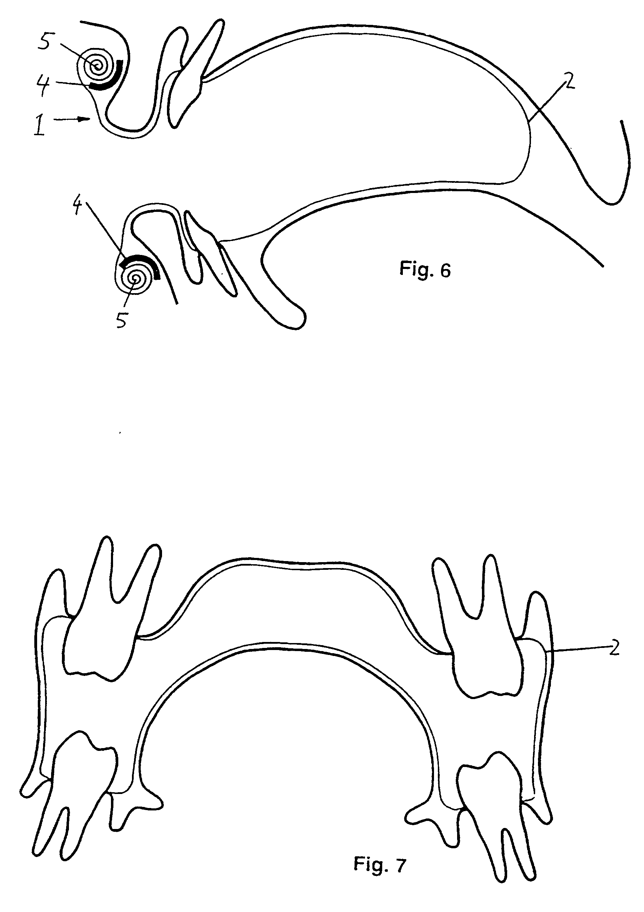

Es ist auch denkbar, auf die Anlageelemente 3a - 3d zu verzichten, insbesondere wenn die Form des Abdeckmittels 2 sehr gut der Innenform der Mundhöhle angepasst ist. Eine entsprechende Ausführung ist in Fig. 6 und 7 dargestellt. Vorzugsweise wird auch hier die Aussenseite des Abdeckmittels zumindest im Bereich der Gingiva mit einer Klebeschicht versehen, so dass um den Operationsbereich eine ausreichende Abdichtung erzielt und der Kofferdam fixiert werden kann. In der dargestellten Ausführung reicht das Abdeckmittel wie bei einem konventionellen Kofferdam bis an die Zahnhälse. '

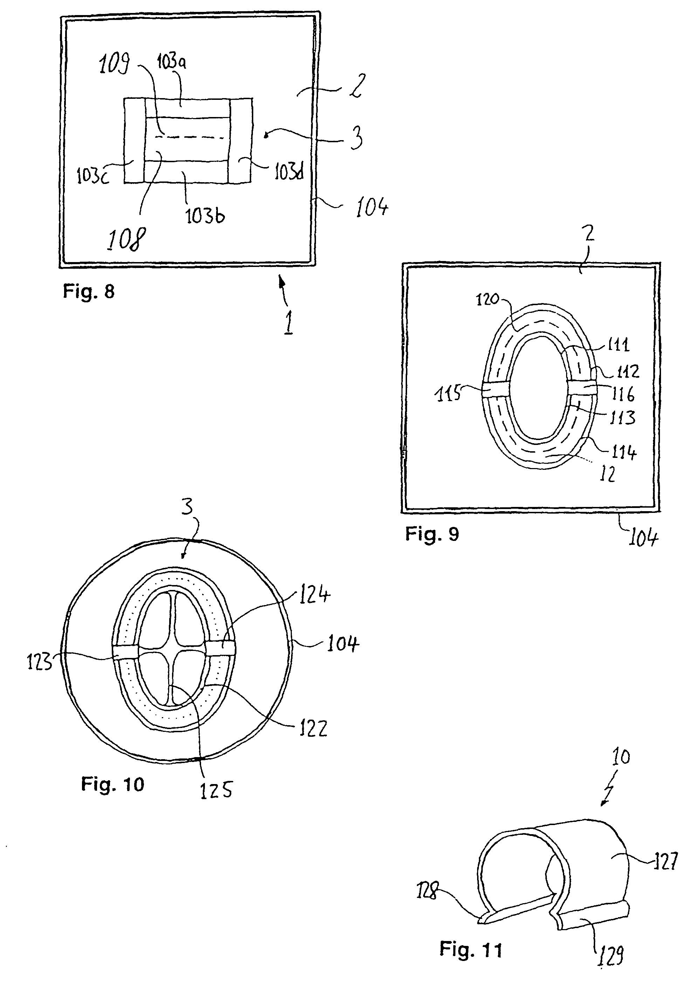

Figur 8 zeigt eine dritte Ausführung eines erfindungsgemässen Kofferdams 1 bestehend aus einem Abdeckmittel 2 und der Befestigungsvorrichtung 3. In diesem Fall ist das Abdeckmittel 2 eine plane Folie aus Rohlatex oder einem anderen geeigneten Material, welche in der Figur in ihrem planen Zustand dargestellt ist.

Die Befestigungseinrichtung 3 weist einen Rahmen aus zwei plastisch verformbaren Anlageelementen 103 a und 103 b und zwei elastischen Verbindungselementen 103 c und 103 d auf, die flächig auf das Abdeckmittel 2 aufgebracht sind und als Haltemittel dienen. Der von den Elementen 103 a bis d gebildeten Rahmen umgrenzt eine Teilfläche 108 des Abdeckmittels 2 auf der eine punktierte Linie 109 für einen einzubringenden Schnitt eingezeichnet ist. Am äusseren Rand des Abdeckmittels 2 ist ein Kofferdamrahmen 104 vorgesehen, der das Gummituch gespannt hält und derartig verformbar ist, dass er den offenen Mundbereich abdeckt, ohne den Zahnarzt oder den Patienten zu behindern.

Auf der dem Haltemittel 103 a bis d gegenüberliegenden Seite des Abdeckmittels 2 ist im Bereich des Haltemittels und der begrenzten Teilfläche 108 eine Klebeschicht aufgetragen, die beispielsweise durch eine Schutzfolie freilegbar ist.

Bei der Verwendung des Kofferdams nach Figur 8 werden die plastischen Elemente 4 und 5 beidseitig der zu behandelnden Zahnreihe so positioniert, dass der Klebebereich auf der Rückseite des Abdeckmittels 2 am Zahnfleisch anliegt.

Die elastischen Elemente 103 c und 103 d liegen wie Bügel über der Zahnreihe und halten die Elemente 103 a und 103 b in Position.

Anschliessend wird ein derart grosszügiger Schnitt 109 in der Teilfläche 108 in das Abdeckmittel 2 geschnitten, dass sowohl die Zahne als auch das die Zähne umgebende Zahnfleisch freigelegt sind. Der übrige Teilbereich 108 des Abdeckmittels 2 wird mit dem Klebebereich an das Zahnfleisch angelegt und bildet zusammen mit dem Haltemittel 103 a bis d eine dichte Umgrenzung des zu behandelnden Bereiches aus Zahn, Zahnhals und ihn umgebendes Zahnfleisch.

Der in Figur 9 gezeigte vierte Kofferdam ist universell einsetzbar zur Behandlung unterschiedlicher Bereiche des Ober- oder Unterkiefers. Bei diesem Ausführungsbeispiel wird das Haltemittel von zwei ineinanderliegenden, im Abstand zueinander angeordneten Bogenelementen 111, 112 gebildet, zu denen spiegelbildlich zwei weitere ineinanderliegende, im Abstand zueinander angeordnete Bogenelemente 113, 114 liegen, so dass auch von zwei ineinander liegenden, im Abstand zueinander angeordneten Ringelementen 111, 113 und 112, 114 gesprochen werden kann. Diese Bogenelemente sind über Knickstellen 115, 116, die ein leichteres Verbiegen in diesem Bereich erlauben, miteinander verbunden.

Zwischen den Bogenelementen 111, 112 und 113, 114 ist auf der Rückseite des Abdeckmittels 2 ein Klebebereich 12 vorgesehen, und um das Abdeckmittel 2 herum erstreckt sich wie beim Ausführungsbeispiel in Figur 8 ein Kofferdamrahmen 104.

Bei der Verwendung dieses vierten Kofferdams wird das Abdeckmittel 2 derart in die Mundhöhle gedrückt, dass die Knickbereiche 115, 116 im Übergangsbereich zwischen Ober- und Unterkiefer liegen. Das Bogenelement 111 liegt dann auf der Innenseite der oberen Zahnreihe am Gaumen an, während das Bogenelement 112 im Bereich der Aussenseite der oberen Zahnreihe am Zahnfleisch anliegt. Entsprechend liegt das Bogenelement 113 an der Innenseite und das Bogenelement 114 an der Aussenseite der unteren Zahnreihe am Zahnfleisch an. Die zu behandelnden Zahnpartien werden freigelegt, indem das Abdeckmittel 2 an den entsprechenden Stellen längs der gestrichelten Linie 120 eingeschnitten wird, wobei der Schnitt so geführt wird, dass um den zu behandelnden Zahnbereich herum sowohl der Zahn als auch der angrenzende Zahnfleischbereich freigelegt wird.

Das in Figur 9 gezeigte Ausführungsbeispiel zeigt deutlich, dass mit einem einzigen, auf eine bestimmte Gebissgrösse abgestimmten Kofferdam jeder Zahnbereich behandelt werden kann.

Figur 10 zeigt eine Weiterentwicklung des Kofferdams nach Fig.9. Hier ist der Kofferdamrahmen 104 kreisförmig ausgebildet und in seiner Grösse so bemessen, dass er zirkulär um die Ober- und Unterlippe verläuft. Dies hat den Vorteil, dass der Kofferdam nur den unbedingt notwendigen Teilbereich des Gesichtes des Patienten bedeckt.

Zur Stabilisierung des inneren Ringelements 122 ist ein zwischen den Knickstellen 123, 124 positioniertes, das Ringelement 122 stützendes Stützelement 125 vorgesehen, das in der in Figur 10 gezeigten Ausführung die Form eines Kreuzes aufweist.

Figur 11 zeigt einen erfindungsgemässen leicht über den Zahn stülpbaren Kunststoffclip 10. Der tunnelförmige Bogen 127 überbrückt eine Zahnreihe und die an seinem unteren Ende angebrachten Halter 128, 129 dienen der Befestigung des Clips 126 an den Bogenelementen 111 und 112 oder 113 und 114.

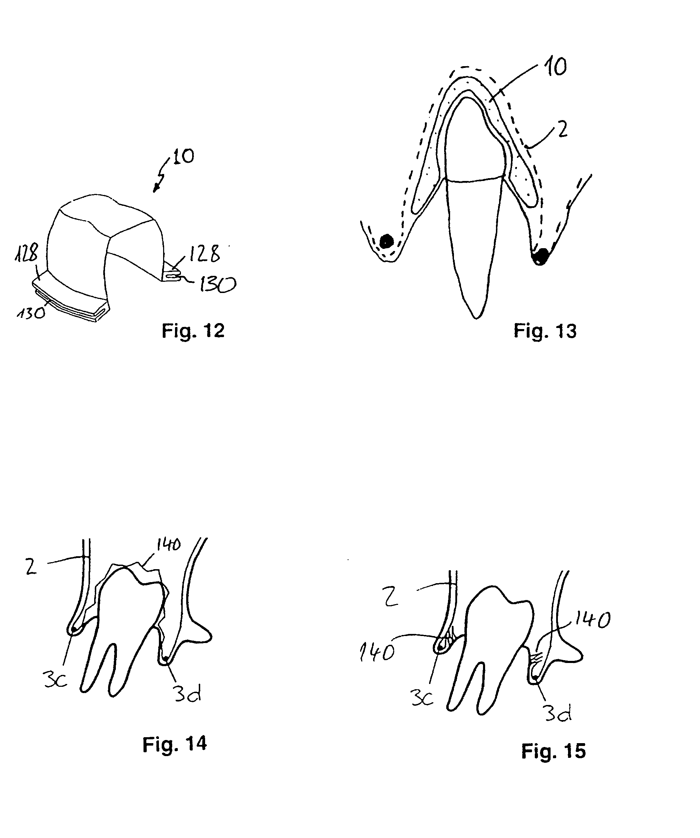

Fig. 12 zeigt eine zweite Ausführung eines Kunststoffclips 10. Er ist ebenfalls im wesentlichen U-förmig vorgeformt und besitzt Halter 128, in denen Nuten 130 ausgeformt sind. Die Nuten 130 dienen zur Aufnahme des Abdeckmittels.

Die Kunststoffclips 10 nach Fig. 11 und 12 werden mit einem geeigneten Kitt oder Kleber an einem Zahn befestigt. Sie können jedoch auch so ausgeformt werden, dass sie auf den Zahn gesteckt werden können und diesen elastisch federnd halten.

Fig. 13 zeigt eine dritte Ausführung eines Clips. Dieser Clip ist anatomisch der Zahnform angepasst. Er kann vorfabriziert sein oder aus einer schnell aushärtenden Kunststoffmasse bestehen, die auf den Zahn aufgeformt und ausgehärtet wird. Zwischen den Clip 10 und dem Zahn kann nötigenfalls ein Kleber eingebracht werden. Das Abdeckmittel 2 wird auf die Aussenseite des Clips geklebt.

In den Figuren 14 und 15 wird eine alternative Ausführung des Abdeckmittels 2 dargestellt. Dieses besitzt im Bereich der Zahnreihen einen Balg-Bereich 140, der Zieharmonika-artig gefaltet ist. Wird er, wie in Fig. 14 dargestellt, aufgeschnitten, so zieht er sich zurück und gibt das Operationsgebiet frei.

Es ist auch denkbar, das Abdeckmittel mit einer Profilierung zu versehen, die dessen Dehnungseigenschaften anisotrop macht. So können zum Beispiel Querrippen im Abdeckmittel ausgeformt werden, so dass das Abdeckmittel in Längsrichtung besser gedehnt werden kann als in Querrichtung.

Festigkeit, Elastizität und Plastizität der einzelnen Elemente des erfindungsgemässen Kofferdams sind so aufeinander abzustimmen, dass eine ausreichend sichere Abdichtung des zu behandelnden Zahn- und ggf. Zahnfleischbereiches erreicht wird.

Das bei Kofferdamanwendungen übliche Gummituch kann auch durch eine flexible, im wesentlichen, unelastische Folie ersetzt werden, ohne dass die Funktion des Kofferdams beeinträchtigt wird. Besonders geeignet sind haptisch angenehme oder auch atmungsaktive Folien. Es können auch Geschmacksstoffe eingesetzt werden.

Das Abdeckmittel 2 kann auch formstabil ausgeführt werden, z.B. als elastisches aber formstabiles Kunststoffteil, so dass es gleichzeitig die Rolle der Befestigungseinrichtung 3a - 3d übernehmen kann.

Der Kofferdam kann aber auch nur aus einer flexiblen Folie ohne Befestigungseinrichtung bestehen. Die Folie ist flexibel und auf ihrer gesamten Aussenseite mit Kleber versehen. Sie wird ähnlich einer Tapete auf die Schleimhaut der Mundhöhe geklebt.

Das Abdeckmittel kann auch ohne Klebeschicht verkauft werden, in welchem Falle der Anwender selbst den Kleber auf die Schleimhaut und/oder das Abdeckmittel appliziert.

Als Kleber kommen physiologisch verträgliche Mittel in Frage, die geeignet sind, die Ablösekraft zwischen Abdeckmittel und Schleimhaut zu erhöhen. Insbesondere kann z.B. auch ein viskoses Adhäsivmittel verwendet werden, welches eine Kraft senkrecht zum Abdeckmittel zu erzeugen vermag und dennoch ein Gleiten des Abdeckmittels auf der Schleimhaut zulässt.

Der erfindungsgemässe Kofferdam erlaubt die Verwendung der Kofferdamisolation praktisch für alle zahnmedizinischen Eingriffe. Besonders erwähnenswert wären unter anderem das Erstellen von Röntgenbildern, die Okklusionskontrolle; die Präperation von Kronenstümpfen und Veneers, die adhäsive Befestigung von Werkstücken (dento-gingivale Isolation), das Setzen von Implantaten, das Abnehmen von Einzelabdrücken (dento-alveoläre Isolation), etc.

Die Darstellung des Operationsfeldes mit Einschluss behandlungsrelevanter oraler Strukturen in die Isolation und Ablösung von stark traumatisierenden mechanischen Kräften für die Kofferdamfixation durch eine breitflächige, schwach-adhäsive, gewebefreundliche Abdichtung der angrenzenden Gingiva verhindert Gingivaverletzungen und Traumatisierung der Zahnhalsregion durch konventionelle Befestigungseinrichtungen. Neben der "Weiss"-Ästhetik (Zähne) ist auch die "Rot"-Ästhetik (Zahnfleisch) jederzeit beurteilbar. Der Kofferdam ermöglicht eine nicht traumatisierende Isolation des Operationsbereiches während der ganzen Behandlung.

Der Kofferdam kann auch für Schleimhautbehandlungen ausserhalb des Zahnbereichs eingesetzt werden, z.B. für die Behandlung von Abszessen.

Die Applikation des Kofferdams kann rasch erfolgen und ist gewebeschonend, insbesondere bei Verwendung eines eingearbeiteten Haltemittels. Das System ist einfach und überschaubar, da es nur aus Kofferdam, speziellem Kofferdamrahmen und gegebenenfalls einem Haftmittel besteht.

Wie für den Fachmann ersichtlich ist, können die hier gezeigten Systemkomponenten (wie z.B. die verschiedenen Teile des Kofferdams, die Kunststoffclips und deren Anwendungsverfahren) einzeln oder in Kombination eingesetzt werden. Entsprechend behält sich der Anmelder vor, für diese Komponenten einzeln Schutz zu beantragen.

Während in der vorliegenden Anmeldung bevorzugte Ausführungen der Erfindung beschrieben sind, ist klar darauf hinzuweisen, dass die Erfindung nicht auf diese Beschränkt ist und in auch anderer Weise innerhalb des Umfangs der folgenden Ansprüche ausgeführt werden kann.

## Patentansprüche

1. Kofferdam mit einem mindestens teilweise von einer flexiblen Folie gebildeten Abdeckmittel (2) zum Abdecken des Mundraumes, wobei das Abdeckmittel in entspanntem Zustand Beutelform besitzt, **gekennzeichnet durch** eine Befestigungseinrichtung mit einem relativ zum Abdeckmittel (2) festeren Haltemittel (3a - d; 103a - d) zum Anpressen des Abdeckmittels gegen die Mundhöhle, bzw. das Zahnfleisch, bzw. die Schleimhaut, und einen Kofferdamrahmen (4; 104) zur perioralen Anordnung ausserhalb des Mundes.

2. Kofferdam nach Anspruch 1, **dadurch gekennzeichnet, dass** das Abdeckmittel (2) in einem Randbereich (5) aufgerollt ist.

3. Kofferdam nach einem der vorangehenden Ansprüche, **dadurch gekennzeichnet, dass** das Abdeckmittel (2) an seiner Aussenseite mindestens einen mit Adhäsionsvermittler ausgestatteten oder zur Aufnahme von Adhäsivvermittler geeigneten Adhäsivbereich (12) aufweist.

4. Kofferdam nach einem der vorangehenden Ansprüche, dadurch gekennzeinnzeichnet, dass das Haltemittel ausgestaltet ist zum Auspressen des Abdeckmittels um die Alveolarfortsätze.

5. Kofferdam nach einem der vorangehenden Ansprüche, **dadurch gekennzeichnet, dass** das Haltemittel in der.Mundhöhle beidseitig einer Zahnreihe an das Zahnfleisch, bzw. die Schleimhaut anlegbar ist, um Zahn und Zahnfleisch gemeinsam zu isolieren.

6. Kofferdam nach einem der vorangehenden Ansprüche, **dadurch gekennzeichnet, dass** im Breich des Haltemittels ein Klebebereich (12, 108) angeordnet ist.

7. Kofferdam nach einem der vorangehenden Ansprüche, **dadurch gekennzeichnet, dass** das Haltemittel (3a - d, 103a - d) plastisch verformbar ist.

8. Kofferdam nach einem der Ansprüche 1-6, **dadurch gekennzeichnet, dass** des Haltemittel (3a - 3d, 103a - d) elastisch verformbar ist.

9. Kofferdam nach einem der vorangehenden Ansprüche, **dadurch gekennzeichnet, dass** das Haltemittel um eine Öffnung bzw. eine Markierung für eine Öffnung (7, 109, 120) im Abdeckmittel (2) angeordnet ist.

10. Kofferdam nach einem der vorangehenden Ansprüche, **dadurch gekennzeichnet, dass** das Haltemittel zwei ineinanderliegende, im Abstand zueinander angeordnete Bogenelemente (3 a, 3c; 3 b, 3 d; 111, 112; 113, 114) aufweist.

11. Kofferdam nach einem der vorangehenden Ansprüche, **dadurch gekennzeichnet, dass** das Haltemittel zwei ineinanderliegende, im Abstand zueinander angeordnete Ringelemente (111, 113; 112, 114) aufweist.

12. Kofferdam nach einem der Ansprüche 10 oder 11, **dadurch gekennzeichnet, dass** zwischen den Bogenelementen bzw. den Ringelementen ein Adhäsivbereich (12) angeordnet ist.

13. Kofferdam nach einem der vorhergehenden Ansprüche, **gekennzeichnet durch** eine Befestigungseinrichtung, welche über den Zahn stülpbare Kunststoffclips (10) aufweist.

14. Kofferdam nach einem der vorangehenden Ansprüche, **dadurch gekennzeichnet, dass** der Kofferdamrahmen (4, 104) zirkulär um die Befestigungseinrichtung angeordnet ist.

15. Kofferdam nach einem der vorangehenden Ansprüche, **dadurch gekennzeichnet, dass** im Abdeckmittel (2) in einem inzisalen/okklusalen Bereich mindestens eine Rille (7) angeordnet ist zur Markierung einer Sollschnittstelle.

16. Kofferdam nach einem der vorangehenden Ansprüche, **dadurch gekennzeichnet, dass** das Haltemittel (3a - d; 103a - d) Anlageelemente (3a, c; 103a, c) aufweist zur Anordnung in der oberen und unteren Umschlagfalte des Mundraumes.

17. Kofferdam nach Anspruch 16, **dadurch gekennzeichnet, dass** die Anlageelemente (3a, c; 103a, c) zum Erzeugen vertikaler Spannkräfte bogenförming miteinander verbunden sind.

18. Kofferdam nach einem der Ansprüche 16 oder 17, **dadurch gekennzeichnet, dass** die Anlageelemente innerhalb des beutelförmigen Abdeckmittels angeordnet bzw. in das Abdeckmittel (2) einbringbar sind.

19. Kofferdam nach einem der vorangehenden Ansprüche, **dadurch gekennzeichnet, dass** mindestens ein Teil einer Aussenseite des Abdeckmittels eine adhäsive Beschichtung aufweist, geeignet zum Erzeugen einer haftenden Verbindung zwischen dem Kofferdam und mindestens einem Teil der Schleimhaut des Mundraumes.

20. Kofferdam nach einem der vorangehenden Ansprüche, **dadurch gekennzeichnet, dass** er elastische, insbesondere balgartige, Ausformungen (140) zur Aufnahme der Zahnbögen aufweist.

21. Kofferdam nach einem der vorangehenden Ansprüche, **dadurch gekennzeichnet, dass** er in einem perioralen Bereich radial dehnbar ist.

22. Kofferdam nach einem der vorangehenden Ansprüche, **dadurch gekennzeichnet, dass** er einen Geschmacksstoff aufweist.

## Claims

1. Rubber dam with a cover means (2) formed at least partially by a flexible foil for covering the oral cavity, wherein the cover means has, in a relaxed state, bag shape, **characterised by** an attaching device with a holder means (3a - d; 103a - d) firmer than the cover means (2) for pressing the cover means against the oral cavity or the gingiva or the mucosa, and a rubber dam frame (4; 104) for a perioral arrangement outside the mouth.

2. Rubber dam of claim 1, **characterised in that** the cover means (2) is rolled up in a margin section (5).

3. Rubber dam of any of the preceding claims, **characterised in that** the cover means (2) comprises at least one adhesive region (12) on its outer side provided and adhesive agent with or suitable for receiving an adhesive agent.

4. Rubber dam of any of the preceding claims, **characterised in that** the holder means is designed for pushing the cover means against the alveolar processes.

5. Rubber dam of any of the preceding claims, **characterised in that** the holder means can be applied to the gingiva of both sides of a row of teeth in the oral cavity in order to commonly isolate tooth and gingiva.

6. Rubber dam of any of the preceding claims, **characterised in that** a gluing area (12, 108) is provided in the region of the holder means.

7. Rubber dam of any of the preceding claims, **characterised in that** the holder means (3a - d, 103a - d) can be deformed plastically.

8. Rubber dam of any of the claims 1 - 6, **characterised in that** the holder means (3a - d, 103a - d) can be deformed elastically.

9. Rubber dam of any of the preceding claims, **characterised in that** the holder means is arranged around an opening or a mark for an opening (7, 109, 120) in the cover means (2).

10. Rubber dam of any of the preceding claims, **characterised in that** the holder means comprises two arc elements (3a, 3c; 3b, 3d; 111, 112; 113, 114) arranged at a distance from each other.

11. Rubber dam of any of the preceding claims, **characterised in that** the holder means comprises two ring elements (111, 113; 112, 114) arranged at a distance from each other.

12. Rubber dam of any of the claims 10 or 11, **characterised in that** an adhesive region (12) is arranged between the arc or ring elements, respectively.

13. Rubber dam of any of the preceding claims **characterised by** an attaching device comprising plastic clips (10) that can be slid over the tooth.

14. Rubber dam of any of the preceding claims, **characterised in that** the rubber dam frame (4, 104) is arranged circularly around the attaching device.

15. rubber dam of any of the preceding claims **characterised in that** at least one groove (7) is arranged in the cover means (2) in a incisal/occulsal area for marking a desired cutting position.

16. Rubber-dam of any of the preceding claims **characterized in that** the holder means (3a - d; 103a - d) comprises abutting members (3a, c; 103, c) for being arranged in the upper and lower vestibules of the oral cavity.

17. Rubber-dam of claim 16, **characterised in that** the abutting members (3a, c; 103a, c) are interconnected in an arch for generating vertical tensional forces.

18. Rubber-dam of one of the claims 16 or 17, **characterised in that** the abutting members are arranged within the bag-shaped cover means or can be inserted into the cover means (2).

19. Rubber dam of any of the preceding claims **characterised in that** at least a part of an outer side of the cover means comprises an adhesive coating suited for generating an adhesive connection between the rubber dam and at least part of the mucosa of the oral cavity.

20. Rubber dam of any of the preceding claims **characterised in that** it comprises elastic, in particular bellows-shaped bulges (140) for receiving the dental arcs.

21. Rubber dam of any of the preceding claims, **characterised in that** it is radially stretchable in a perioral region.

22. Rubber dam of any of the preceding claims, **characterised in that** it comprises a flavouring.

## Revendications

1. Digue dentaire avec un moyen couvrant (2) formé au moins en partie par une feuille flexible destinée à recouvrir la cavité buccale et ayant au repos la forme d'un sac, **caractérisée par** un dispositif de fixation comprenant des moyens de fixation (3a-d; 103a-d) plus rigides que le moyen couvrant (2), pour presser celui-ci contre la cavité buccale, respectivement contre les gencives ou la muqueuse, ainsi que par un cadre de digue (4; 104) prévu pour être agencé périoralement à l'extérieur de la bouche.

2. Digue dentaire selon la revendication 1, **caractérisée en ce qu'**une partie périphérique (5) du moyen couvrant (2) est enroulée.

3. Digue dentaire selon une des revendications précédentes, **caractérisée en ce que** le moyen couvrant (2) présente à sa surface extérieure au moins un domaine d'encollage (12) apte à recevoir un promoteur d'adhésion ou comportant un tel promoteur d'adhésion.

4. Digue dentaire selon une des revendications précédentes, **caractérisée en ce que** le dispositif de fixation est agencé pour presser le moyen couvrant autour des rebords alvéolaires.

5. Digue dentaire selon une des revendications précédentes, **caractérisée en ce que** le dispositif de fixation est prévu pour être appliqué dans la cavité buccale contre les gencives, respectivement contre les muqueuses, des deux cotés d'une rangée de dents, pour isoler ensemble une ou plusieurs dents et une partie de la gencive.

6. Digue dentaire selon une des revendications précédentes, **caractérisée en ce qu'**une région adhésive (12, 108) est prévue dans le domaine des moyens de fixation.

7. Digue dentaire selon une des revendications précédentes, **caractérisée en ce que** les moyens de fixation (3a-d; 103a-d) sont déformables plastiquement.

8. Digue dentaire selon une des revendications 1 à 6, **caractérisée en ce que** les moyens de fixation (3a-3d; 103a-3) sont déformables élastiquement.

9. Digue dentaire selon une des revendications précédentes, **caractérisée en ce que** les moyens de fixation sont disposés autour d'une ouverture, respectivement autour d'une marque pour une ouverture (7, 109, 120) dans le moyen couvrant (2).

10. Digue dentaire selon une des revendications précédentes, **caractérisée en ce que** les moyens de fixation comportent deux éléments courbes engagés l'un dans l'autre et situés à distance l'un de l'autre (3a, 3c; 3b, 3d; 111, 112; 113, 114).

11. Digue dentaire selon une des revendications précédentes, **caractérisée en ce que** les moyens de fixation comportent deux éléments annulaires engagés l'un dans l'autre et situés à distance l'un de l'autre (111, 113; 112, 114).

12. Digue dentaire selon une des revendications 10 ou 11, **caractérisée en ce qu'**il comporte un domaine d'encollage (12) entre les éléments courbes, respectivement annulaires.

13. Digue dentaire selon une des revendications précédentes, **caractérisée par** un dispositif de fixation comportant des clips (10) en matière plastique agencés pour être engagés sur une dent.

14. Digue dentaire selon une des revendications précédentes; **caractérisée en ce que** le cadre de digue (4, 104) est disposé circulairement autour du dispositif de fixation.

15. Digue dentaire **caractérisée en ce qu'**au moins une rainure (7) est prévue en une région incisale-occlusale du moyen couvrant (2) pour identifier une ligne de découpe.

16. Digue dentaire selon une des revendications précédentes, **caractérisée en ce que** les moyens de fixation (3a-d; 103a-d) comportent des éléments d'application (3a, c; 103a, c) destinés à être disposés dans le pli vestibulaire supérieur et inférieur de la bouche.

17. Digue dentaire selon la revendication 16, **caractérisée en ce que** les éléments d'application (3a, c; 103a, c) sont connectés en arc l'un à l'autre afin de produire des forces de tension verticales.

18. Digue dentaire selon une des revendications 16 ou 17, **caractérisée en ce que** les éléments d'application sont disposés à l'intérieur de la partie en forme de sac du moyen couvrant (2) ou peuvent être incorporés à celui-ci.

19. Digue dentaire selon une des revendications précédentes, **caractérisée en ce qu'**au moins une partie d'un coté extérieur de moyen couvrant comporte une couche adhésive capable du provoquer une adhésion entre la digue dentale et au moins une partie de la muqueuse buccale.

20. Digue dentaire selon une des revendications précédentes, **caractérisée en ce qu'**elle comporte des soufflets élastiques (140) destinés à recevoir les rangées de dents.

21. Digue dentaire selon une des revendications précédentes, **caractérisée en ce qu'**elle est extensible radialement dans une région périorale.

22. Digue dentaire selon une des revendications précédentes, **caractérisée en ce qu'**elle comporte un agent gustatif.
